# EUROPEAN PATENT APPLICATION

(11) **EP 4 583 300 A1**
(43) Date of publication of application: **09.07.2025**
(21) Application number: 23860011.8
(22) Date of filing: 10.08.2023
(51) Int. Cl.: H01M 50/533, H01G 11/74, H01M 50/536

(54) **POWER STORAGE DEVICE**

(30) Priority: 31.08.2022 JP 2022138391
(71) Applicant: Panasonic Intellectual Property Management Co., Ltd., Kadoma-shi, Osaka 571-0057 (JP)
(72) Inventor: SAKAMOTO, Shinichi, Kadoma-shi, Osaka 571-0057 (JP); KOZUKI, Kiyomi, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2023/029272
(87) International publication number: WO 2024/048246

(57) **Abstract**

A power storage device including: an electrode body including a positive electrode and a negative electrode being wound with a separator interposed therebetween; and a negative electrode current collector plate joined to the negative electrode disposed at one end in an axial direction of the electrode body. The current collector plate includes a core material joint part extending in a radiation direction of the electrode body, and including a surface facing the negative electrode joined to the negative electrode in the axial direction, and eaves parts formed on both end parts in a circumferential direction of the core material joint part, and extending toward the negative electrode in the axial direction.

## Description

### Technical Field

The present disclosure relates to a power storage device.

### Background Art

A cylindrical battery that is one type of power storage device includes a wound electrode body including a positive electrode plate and a negative electrode plate wound with a separator interposed therebetween. Furthermore, a large-diameter cylindrical battery may include a structure (hereinafter referred to as an end surface current collecting structure) in which a negative electrode current collector plate is joined to a negative electrode core material exposed part protruding from the wound electrode body (for example, Patent Literature 1).

### Citation List

### Patent Literature

[PTL 1] Japanese Unexamined Patent Application, Publication No. 2008-103309

### SUMMARY OF THE INVENTION

In an end surface current collecting structure described above, a long negative electrode current collector plate is joined by welding to a negative electrode core material exposed part protruding downward from the wound electrode body in the radial direction of a wound electrode body. In a joining step of an end surface current collecting structure, by irradiating the negative electrode current collector plate with laser or the like from below the negative electrode current collector plate, the negative electrode current collector plate and the negative electrode core material exposed part that adheres to the upper surface of the negative electrode current collector plate are melted and joined together. At this time, spatters due to welding may occur near the upper surface of the negative electrode current collector plate. When spatters scatter between the negative electrode current collector plate and the electrode body and are attached to a mixture material of the wound electrode body, poor voltage of the cylindrical battery may occur.

Thus, an object of the present disclosure is to provide a power storage device capable of improving reliability.

A current collector plate of a power storage device according to the present disclosure includes an electrode body including a first electrode plate and a second electrode plate being wound with a separator interposed therebetween, and a current collector plate joined to the first electrode plate disposed at one end in the axial direction of the electrode body. The current collector plate includes a joint part extending in a radial direction of the electrode body and including a surface facing the first electrode plate joined to the first electrode plate in the axial direction, and eaves parts formed on both end parts of the joint part in a circumferential direction and extending toward the first electrode plate in the axial direction.

The power storage device of the present disclosure can reduce poor voltage.

### BRIEF DESCRIPTION OF DRAWINGS

FIG. 1 is a sectional view showing a power storage device according to an example of an exemplary embodiment.
FIG. 2 is a perspective view showing a current collector plate according to an example of the exemplary embodiment.
FIG. 3 is a sectional view perpendicular to a radial direction of a negative electrode current collector body (a sectional view taken on line AA of FIG. 2).
FIG. 4 is a sectional view perpendicular to a radial direction, showing a negative electrode current collector plate according to another example of the exemplary embodiment.
FIG. 5 is a sectional view perpendicular to a radial direction, showing a joint part between a negative electrode current collector plate and a negative electrode core material.
FIG. 6 is a sectional view perpendicular to a circumferential direction, showing the joint part between the negative electrode current collector plate and the negative electrode core material.
FIG. 7 is a flow showing a flow of steps of joining the negative electrode current collector plate and the negative electrode core material.

### Description of Embodiments

Hereinafter, an example of an exemplary embodiment of the present disclosure is described in detail. In the following description, the specific shapes, materials, directions, numbers, and the like, are examples for facilitating understanding the present disclosure, and can be appropriately modified according to uses of application, objects, specifications, and the like.

### <Power storage device>

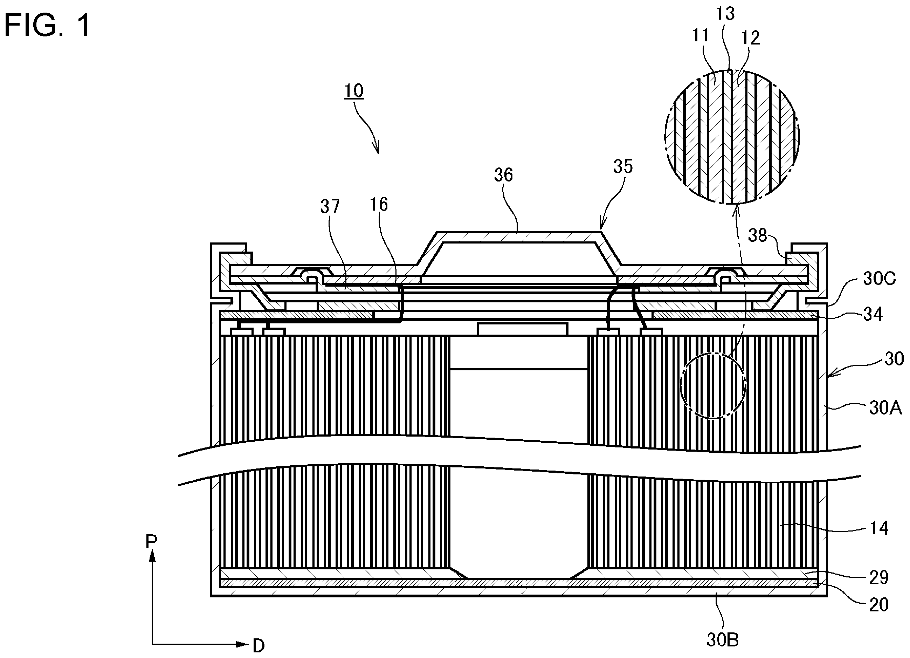

With reference to FIG. 1, battery 10 as an example of an exemplary embodiment is described. Note here that the power storage device of the present disclosure is not limited to a battery, and may be a capacitor including an electrode body including a positive electrode plate and a negative electrode plate wound with a separator interposed therebetween.

Battery 10 as an example of the power storage device includes electrode body 14 including a belt-like positive electrode plate 11 as a belt-like first electrode plate and negative electrode plate 12 as a second electrode plate wound with belt-like separator 13 interposed therebetween, and negative electrode current collector plate 20 joined to negative electrode core material exposed part 29 (negative electrode plate 12) protruding from electrode body 14. With battery 10, reliability can be improved, although details are described later.

Furthermore, battery 10 includes the above-described electrode body 14, an electrolyte (not shown), outer covering can 30 accommodating electrode body 14 and the electrolyte, and sealing body 35 for closing an opening of outer covering can 30. In the following, each member is described according to the axial direction P, the radial direction D, and the circumferential direction R of battery 10 (electrode body 14). Furthermore, in the axial direction P, a side at which sealing body 35 described later is provided may be described as an upper side, and a side near bottom part 30B of outer covering can 30 may be described as a lower side.

Positive electrode plate 11 includes a belt-like positive electrode core material and a positive electrode mixture layer formed on at least one surface of the positive electrode core material. Examples of the positive electrode core materials include foil of metal that is stable in the positive electrode potential range, such as aluminum, an aluminum alloy, and the like, and a film including such metal disposed in its surface layer. The positive electrode mixture layer includes a positive electrode active material, a conductive agent such as acetylene black, and a binder such as polyvinylidene fluoride, and is preferably formed on both surfaces of the positive electrode core material. For the positive electrode active material, for example, a lithium transition metal composite oxide is used.

On the upper side of electrode body 14, positive electrode current collector plate 37 constituting sealing body 35 and upper insulating plate 34 disposed between electrode body 14 and sealing body 35 are provided. Positive electrode current collector plate 37 is coupled to the positive electrode core material of positive electrode plate 11 by positive electrode lead 16. Upper insulating plate 34 prevents positive electrode plate 11 and positive electrode lead 16 from being brought into contact with outer covering can 30, and prevents positive electrode lead 16 from being brought into contact with the negative electrode of electrode body 14.

Negative electrode plate 12 includes a belt-like negative electrode core material and a negative electrode mixture layer formed on at least one surface of the negative electrode core material. Examples of the negative electrode core material include foil of metal that is stable in an electric potential range of the negative electrode, such as copper or a copper alloy, nickel or a nickel alloy, and a film with such metal disposed on its surface layer, or the like. The negative electrode mixture layer includes a negative electrode active material and a binder such as styrene-butadiene rubber (SBR), and is preferably formed on both surfaces of the negative electrode core material. Examples of the negative electrode active material include graphite, a silicon-containing compound, and the like.

On the lower side of negative electrode plate 12 (one end in the width direction of negative electrode plate 12), negative electrode core material exposed part 29 in which the negative electrode mixture layer is not provided in the negative electrode core material protrudes. Negative electrode core material exposed part 29 is formed from a winding-start end to a winding-finish end in the longitudinal direction (circumferential direction R) of long negative electrode plate 12. Negative electrode current collector plate 20, the details of which are described later, is provided below electrode body 14, and negative electrode core material exposed part 29 is joined to negative electrode current collector plate 20. Thus, negative electrode plate 12 and negative electrode current collector plate 20 are electrically connected. Furthermore, negative electrode current collector plate 20 is joined to the inner surface of bottom part 30B of outer covering can 30, and negative electrode current collector plate 20 and outer covering can 30 are electrically connected to each other. This connection causes outer covering can 30 to function as a negative external terminal.

The electrolyte is a non-aqueous electrolyte, and includes a non-aqueous solvent and an electrolyte salt dissolved in the non-aqueous solvent. Examples of the non-aqueous solvent include esters, ethers, nitriles, amides, and mixed solvents of two or more of these. The non-aqueous solvent may contain a halogen-substituted product in which at least a part of hydrogen in these solvents is substituted with a halogen atom such as fluorine. Examples of the non-aqueous solvents include ethylene carbonate (EC), ethyl methyl carbonate (EMC), dimethyl carbonate (DMC), and mixed solvents thereof. As the electrolyte salt, for example, a lithium salt such as LiPF₆ is used.

Outer covering can 30 is a bottomed cylindrical battery metal container with an upper end side opened, and includes cylinder part 30A formed in a cylindrical shape and bottom part 30B that is circular when viewed from the bottom. Outer covering can 30 is generally made of metal including iron as a main component. However, outer covering can 30 may be made of metal including aluminum as a main component especially when outer covering can 30 is electrically connected to positive electrode plate 11. When outer covering can 30 includes iron as a main component, the surface of the iron may be plated with nickel or the like. Furthermore, cylinder part 30A of outer covering can 30 includes groove part 30C formed in the circumferential direction R of cylinder part 30A. Groove part 30C is formed near the opening of outer covering can 30 at a position a predetermined distance away from an opening edge (upper end of outer covering can 30). The predetermined length is, for example, a length corresponding to 1 to 20% of the length of outer covering can 30 in the axial direction P.

In this exemplary embodiment, bottom part 30B of outer covering can 30 includes a safety valve mechanism that operates when an abnormality occurs in battery 10. On the other hand, sealing body 35 is not provided with a safety valve mechanism. However, sealing body 35 may also be provided with a safety valve mechanism. For example, a groove-shaped thin part is formed in bottom part 30B. When an abnormality occurs and the internal pressure increases in battery 10, when bottom part 30B is pushed outward of outer covering can 30, the thin part is preferentially broken, and a gas outlet is formed in bottom part 30B.

Groove part 30C is a part of cylinder part 30A that projects to the inside of outer covering can 30, and is formed, for example, by spinning cylinder part 30A from the outside. Note here that in the position where groove part 30C is formed, the diameter of outer covering can 30 is reduced, and a thin linear groove is formed on the outer circumferential surface of cylinder part 30A. It is preferable that a shape of the sectional surface of groove part 30C is substantially a U-shape, and groove part 30C is formed in an annular shape over the entire length of cylinder part 30A in the circumferential direction R. Groove part 30C is formed by processing cylinder part 30A after electrode body 14 is accommodated in outer covering can 30.

Sealing body 35 includes cap 36, positive current collector plate 37, and gasket 38, and is formed in a disk shape as a whole. Sealing body 35 is disposed above groove part 30C of outer covering can 30 and fixed to the opening of outer covering can 30. The upper end of the opening is bent inward and caulked to sealing body 35 via gasket 38. In other words, sealing body 35 is fixed to the upper end of outer covering can 30 by groove 30C and the caulking part of outer covering can 30, and closes the opening of outer covering can 30. The caulking part is formed in an annular shape in the circumferential direction R of outer covering can 30, and the caulking part and groove part 30C sandwich sealing body 35.

Cap 36 is a disk-shaped metal member that is exposed to the outside of outer covering can 30 and forms the top surface of battery 10. Cap 36 is in a shape in which a center part in the radial direction D protrudes outward from battery 10 (a raised region). A wiring material is connected to cap 36 when a plurality of batteries 10 is modularized to form a battery pack. Therefore, cap 36 functions as an external terminal of battery 10. In this exemplary embodiment, positive electrode lead 16 is electrically connected to positive current collector plate 37, and cap 36 functions as a positive external terminal.

Positive electrode current collector plate 37 is a metal member whose diameter is substantially the same as that of cap 36, and is disposed nearer to electrode body 14 than cap 36. Positive electrode current collector plate 37 is formed in an annular shape including an opening at the center part in the radial direction D. Cap 36 and positive electrode current collector plate 37 are welded to each other, and positive electrode current collector plate 37 is welded, for example, to a position nearer to the outer peripheral edge of cap 36 than to the center part in the radial direction D. Note here that positive electrode lead 16 may be fixed by bringing a ring-shaped current collecting member into contact with the back surface (a surface facing cap 36) of a surface facing positive electrode current collector plate 37 and by sandwiching positive electrode lead 16 from upper and lower sides between positive electrode current collector plate 37 and the current collecting member.

Gasket 38 is provided on the outer periphery of a laminate of cap 36 and positive electrode current collector plate 37. Gasket 38 is an annular resin member or rubber member for preventing contact between cap 36 and positive electrode current collector plate 37 and outer covering can 30 and for ensuring insulation between outer covering can 30 and sealing body 35.

### <Negative electrode current collector plate>

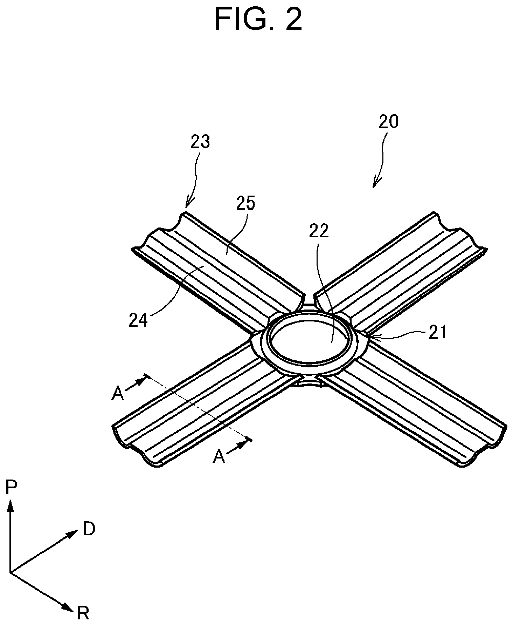

Negative electrode current collector plate 20 as an example of the exemplary embodiment is described with reference to FIGs. 2 to 4.

Negative electrode current collector plate 20 as a current collector plate is joined to negative electrode core material exposed part 29 protruding from the lower side of electrode body 14 in the axial direction P. Furthermore, negative electrode current collector plate 20 is joined to bottom part 30B of outer covering can 30, and allows outer covering can 30 to function as a negative electrode external terminal (see FIG. 1). According to negative electrode current collector plate 20, reliability can be improved, although details are described later.

Negative electrode current collector plate 20 is preferably made of metal such as copper, a copper alloy, nickel or a nickel alloy, or iron plated with nickel on its surface. Negative electrode current collector plate 20 is provided below electrode body 14 in the axial direction P, and is housed in outer covering can 30 together with electrode body 14. In other words, negative electrode current collector plate 20 is disposed between electrode body 14 and bottom part 30B of outer covering can 30 (see FIG. 1).

As shown in FIG. 2, negative electrode current collector plate 20 includes center part 21 provided in the center part when viewed in the axial direction P, and extending parts 23 extending in the radial direction D from center part 21, the details of which are described later. Center part 21 includes can bottom joint part 22 surrounded by a circular groove. Can bottom joint part 22 is joined to bottom part 30B of outer covering can 30 by welding.

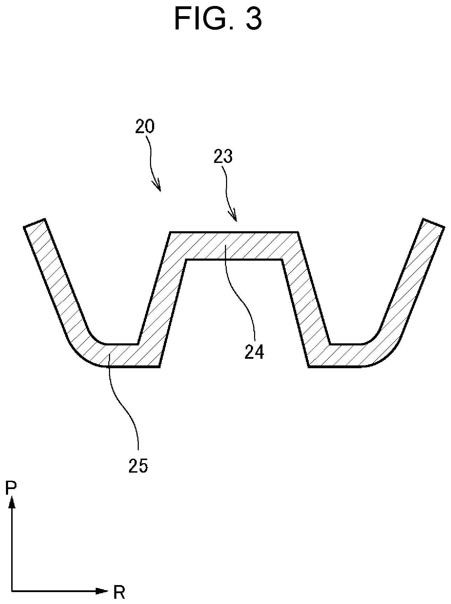

As to extending part 23, a plurality of extending parts 23 extends in the radial direction D from center part 21. The plurality of extending parts 23 is arranged at intervals in the circumferential direction R. In the example shown in FIG. 3, four extending parts 23 are arranged radially every 90° from center part 21. Note here that in this exemplary embodiment, extending part 23 is configured to extend in four directions, but may be configured to extend in one direction, two directions, three directions, or five or more directions.

Extending part 23 includes flat plate-shaped core material joint part 24 extending in the radial direction D, and eaves parts 25 formed at both ends in the circumferential direction R of core material joint part 24, the details of which are described later. To the surface at the upper side of core material joint part 24 in the axial direction, negative electrode core material exposed part 29 is joined by welding. Note here that eaves part 25 may be provided at both ends with respect to one core material joint part 24, but may be formed only at one end in the circumferential direction.

As shown in FIG. 3, as described above, eaves parts 25 are formed at both end parts in the circumferential direction R of core material joint part 24. Each of eaves parts 25 is formed in a substantially V-shape or a substantially U-shape so as to extend in a direction away from the joint part when viewed from the radial direction D, and then to be folded back and extend toward electrode body 14 (see FIG. 3). The outer end part of eaves part 25 in the circumferential direction R is formed to face upward (toward the electrode body) in the axial direction P. Furthermore, outer end part of eaves part 25 in the circumferential direction R is formed to be located in the upper part than core material joint part 24 in the axial direction P. In other words, at least a part of eaves part 25 is formed to be located in the upper part than core material joint part 24 in the axial direction P, and each outer end part of extending part 23 in the circumferential direction R is formed to be located in the top in the axial direction P.

Although details are described later, eaves part 25 makes it possible to prevent spatters from scattering in the circumferential direction R when negative electrode current collector plate 20 and negative electrode core material exposed part 29 are welded. This prevents spatters from scattering on the upper side of negative electrode current collector plate 20 and being attached to a mixture material of electrode body 14, thereby reducing poor voltage of battery 10. Furthermore, since eaves part 25 only partially covers the end face of electrode body 14 in the axial direction, stable exhaustion is possible without reducing the exhaust area in exhausting gas when an abnormality occurs in battery 10 and the internal pressure increases. Furthermore, movement of the electrolytic solution within outer covering can 30 becomes easier. In addition, eaves part 25 can improve the strength of extending part 23.

Note here that in this exemplary embodiment, the outer end part of eaves part 25 in the circumferential direction R is located at the upper side with respect to core material joint part 24 in the axial direction P, but the configuration is not limited to this. The outer end part of eaves part 25 in the circumferential direction R may be located at the same position as core material joint part 24 in the axial direction P, or may be located at the lower side with respect to core material joint part 24 from the viewpoint of suppressing damage to the negative electrode core material. Furthermore, in the outer end part of eaves part 25, the end part near center part 21 in the radial direction may not be connected to center part 21 but may protrude away from center part 21. With this configuration, processing of eaves part 25 is facilitated, sputtering by eaves part 25 becomes easy up to the vicinity of center part 21, exhaust is facilitated, and the electrolyte moves easily.

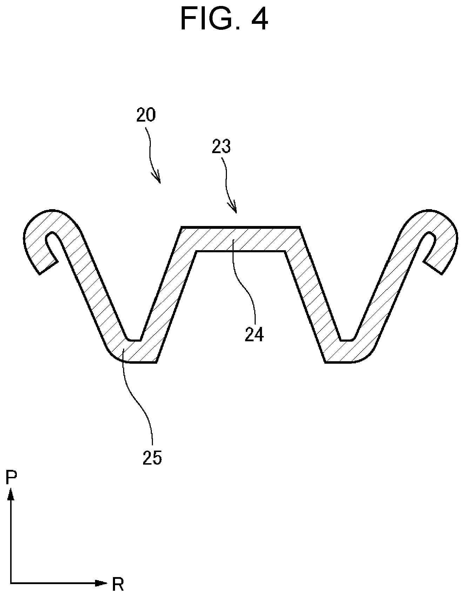

As shown in FIG. 4, an outer edge of eaves part 25 in the circumferential direction R may be bent. In this configuration, although the details are described later, when the outer end part of eaves part 25 bites into and adheres to negative electrode core material exposed part 29, since an R part by bending bites into negative electrode core material exposed part 29, foil breakage in negative electrode core material exposed part 29 can be reduced. Note here that in this exemplary embodiment, the outer end part of eaves part 25 in the circumferential direction R is bent outward in the circumferential direction R, but the configuration is not limited to this. The outer end part of eaves part 25 in the circumferential direction R may be bent inward in the circumferential direction R. Furthermore, when the outer end part is bent outward or inward in the circumferential direction R, the outer end part may be folded back away from electrode body 14 in the axial direction P, or the outer end part may extend in the circumferential direction R. Note here that although the current collector plate used in the power storage device of the present disclosure is described as a negative electrode current collector plate, the power storage device of the present disclosure is not limited to this configuration. A core material exposed part may be provided on the positive electrode plate, and the positive electrode current collector plate may be configured as the negative electrode current collector plate described above. Furthermore, a core material exposed part may be formed on each of the positive electrode plate and the negative electrode plate, and a current collector plate with the same configuration as the negative electrode current collector plate may be joined to each core material exposed part.

### <Joining of negative electrode current collector plate and negative electrode core material exposed part>

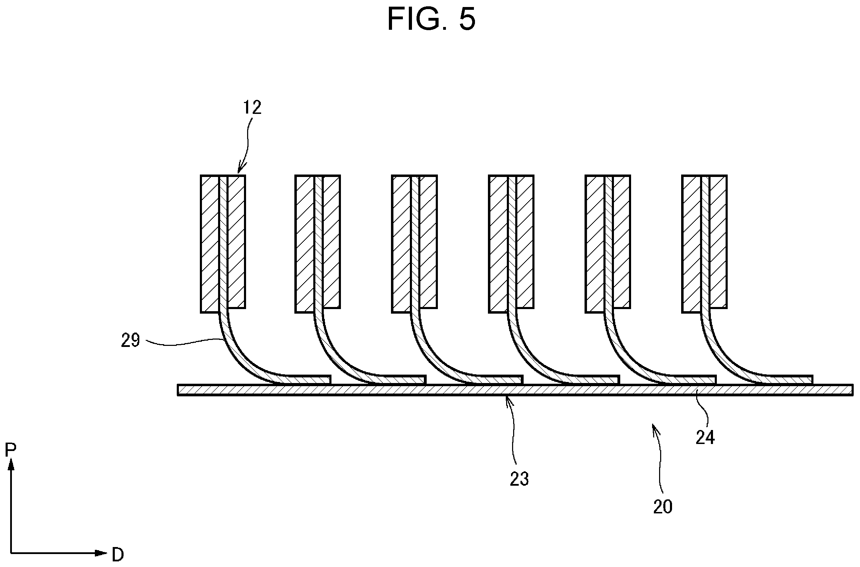

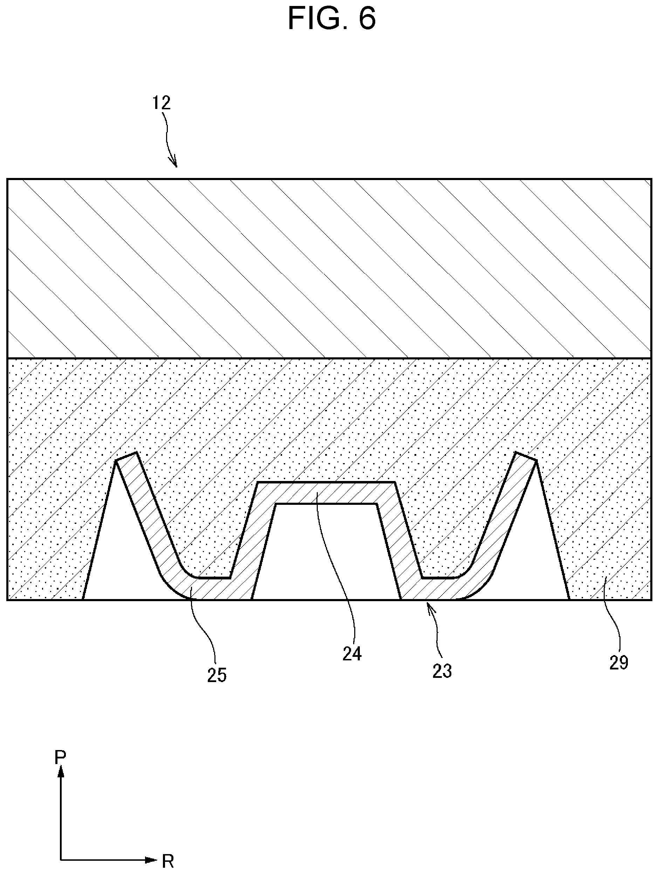

Joining of negative electrode current collector plate 20 and negative electrode core material exposed part 29 are described with reference to FIGs. 5 and 6.

At the lower end part of electrode body 14, as described above, in order to electrically connect negative electrode plate 12 and negative electrode current collector plate 20, negative electrode core material exposed part 29 protruding from the lower side of electrode body 14 is joined to core material joint part 24 of extending part 23 of negative electrode current collector plate 20. Negative electrode core material exposed part 29 and core material joint part 24 are joined to each other by welding, which is described in detail later.

Negative electrode core material exposed part 29 is bent inward in the radial direction D and joined to core material joint part 24. Thus, although details are described later, it is possible to prevent spatters from scattering in the radial direction D during welding between negative electrode current collector plate 20 and negative electrode core material exposed part 29. As a result, it is possible to prevent spatters from scattering on the upper side of negative electrode current collector plate 20 and being attached to the mixture material of electrode body 14, thereby reducing poor voltage of battery 10 due to scattering of spatters.

In this exemplary embodiment, negative electrode core material exposed part 29 is bent inward in the radial direction D over the entire circumference in the circumferential direction R, but the configuration is not limited to this. Only a part in which negative electrode core material exposed part 29 is joined to negative electrode current collector plate 20 in the circumferential direction R may be bent.

On the other hand, extending part 23 of negative electrode current collector plate 20 is joined to negative electrode core material exposed part 29 in a state of biting into negative electrode core material exposed part 29 that has been bent inward in the radial direction D. More specifically, the outer end parts of core material joint part 24 and eaves part 25 deform negative electrode core material exposed part 29 that has been bent inward in the radial direction D and bites into negative electrode core material exposed part 29. Thus, the degree of adhesion between negative electrode plate 12 and negative electrode current collector plate 20 can be improved, and poor welding can be reduced.

### <Joining step of negative electrode current collector plate and negative electrode core material exposed part>

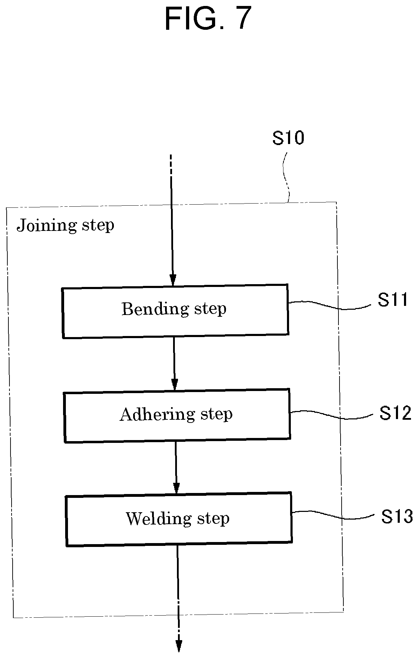

Joining step S10, which is an example of the exemplary embodiment, is described with reference to FIG. 7.

Joining step S10 is a step of joining the above-described negative electrode current collector plate 20 and negative electrode core material exposed part 29 by welding. Joining step S10 is one step in the manufacturing process of battery 10, and description of the other steps in the manufacturing process of battery 10 is omitted. Joining step S10 includes a bending step S11, an adhering step S12, and a welding step S13, the details of which are described later.

In the bending step S11, negative electrode core material exposed part 29 protruding from the lower side of electrode body 14 is bent inward in the radial direction D. In this exemplary embodiment, negative electrode core material exposed part 29 is bent inward in the radial direction D over the entire circumference in the circumferential direction R, but the configuration is not limited to this. Only a part where negative electrode core material exposed part 29 is joined to negative electrode current collector plate 20 in the circumferential direction R may be bent.

In the adhering step S12, core material joint part 24 of extending part 23 and the outer end parts of eaves part 25 of negative electrode current collector plate 20 are pressed to bite into negative electrode core material exposed part 29 while negative electrode core material exposed part 29 is deformed and bent inward in the radial direction D. Thus, negative electrode current collector plate 20 and negative electrode core material exposed part 29 adhere to each other.

In the welding step S13, negative electrode current collector plate 20 that adheres to negative electrode core material exposed part 29 is joined to negative electrode core material exposed part 29 by welding. More specifically, core material joint part 24 of extending part 23 of negative electrode current collector plate 20 and negative electrode core material exposed part 29 are joined by laser welding. At this time, the laser is irradiated from below negative electrode current collector plate 20 in the axial direction P. Furthermore, core material joint part 24 of negative electrode current collector plate 20 is irradiated with a laser beam from outside to inside in the radial direction D.

In the welding step S13, spatter is generated in the upper side of negative electrode current collector plate 20 to which negative electrode core material exposed part 29 is joined. However, since negative electrode core material exposed part 29 is bent, scattering of spatters in the radial direction D is prevented. Furthermore, since eaves parts 25 are formed at both ends in the circumferential direction R of core material joint part 24 of negative electrode current collector plate 20, scattering of spatters in the circumferential direction R is prevented. This prevents spatters from scattering on the upper side of negative electrode current collector plate 20 and being attached to a mixture material of electrode body 14, thereby reducing poor voltage of battery 10.

In this exemplary embodiment, negative electrode current collector plate 20 and negative electrode core material exposed part 29 are joined to each other by laser welding, but the configuration is not limited to this. Negative electrode current collector plate 20 and negative electrode core material exposed part 29 may be joined to each other by electron beam welding, brazing, resistance welding, friction stirring welding, ultrasonic welding, or the like.

Note here that the present disclosure is not limited to the above-described exemplary embodiments and the modifications, and it goes without saying that various modifications and improvements are possible within the scope of the matters described in claims of the present application.

### REFERENCE MARKS IN THE DRAWINGS

10: battery (power storage device),
11: positive electrode plate
12: negative electrode plate
13: separator
14: electrode body
16: positive electrode lead
20: negative electrode current collector plate (current collector plate)
21: center part
22: can bottom joint part
23: extending part
24: core material joint part (joint part)
25: eaves part
29: negative electrode core material exposed part
30: outer covering can
30A: cylinder part
30B: bottom part
30C: groove part
34: upper insulating plate
35: sealing body
36: cap
37: positive electrode current collector plate
37A: opening
38: gasket

## Claims

1. A power storage device comprising:
an electrode body including a first electrode plate and a second electrode plate which are wound with a separator interposed between the first electrode plate and the second electrode plate; and
a current collector plate joined to a part of the first electrode plate, the part being disposed at one end in an axial direction of the electrode body,
the current collector plate including:
a joint part extending in a radial direction of the electrode body, and including a surface facing the first electrode plate joined to the first electrode plate in the axial direction, and
eaves parts disposed on both end parts in a circumferential direction of the joint part, and extending toward the first electrode plate in the axial direction.

2. The power storage device according to claim 1,
wherein each of the eaves parts is disposed in a V shape when viewed in the radial direction.

3. The power storage device according to claim 1 or claim 2,
wherein an outer end part in the circumferential direction of each of the eaves parts is located at any one side with respect to the joint part in the axial direction.

4. The power storage device according to any one of claim 1 to claim 3,
wherein the outer end part in the circumferential direction of each of the eaves parts is folded back in a direction away from the first electrode plate.

5. The power storage device according to any one of claim 1 to claim 4,
wherein in the circumferential direction, a part near the joint part of each of the eaves parts extends in a direction in which a connection part with the joint part is away from the first electrode plate.

6. The power storage device according to any one of claim 1 to claim 5,
wherein a plurality of joint parts are provided on the current collector plate, each of the plurality of the joint parts being the joint part and
in the circumferential direction, the first electrode plate is exposed from between the joint parts adjacent to each other.

7. The power storage device according to any one of claim 1 to claim 6,
wherein the current collector plate includes a center part in a center of the current collector plate,
one end of the joint part is connected to the center part in the radial direction, outer end parts of the eaves part in the circumferential direction are not connected to the center part and protrude to be away from the center part.
